# EUROPEAN PATENT SPECIFICATION

(11) **EP 2 623 003 B1**
(45) Date of publication and mention of the grant of the patent: **21.01.2015**
(21) Application number: 11829492.5
(22) Date of filing: 31.08.2011
(51) Int. Cl.: A47J 45/10, A47J 36/34

(54) **DETACHABLE HANDLE**
ABNEHMBARER GRIFF
POIGNÉE AMOVIBLE

(30) Priority: 01.10.2010 KR 20100095860
(43) Date of publication of application: 07.08.2013
(73) Proprietor: Seowon Pallas Inc., Gyeonggi-do415-871 (KR)
(72) Inventor: SEO, Ki Won, Seoul 150-918 (KR)
(74) Representative: Gille Hrabal
(86) International application number: PCT/KR2011/006453
(87) International publication number: WO 2012/043986

(56) References cited:
- WO-A1-2007/032614
- KR-A- 20100 054 770
- KR-B1- 100 716 595
- KR-B1- 100 933 007
- KR-B1- 100 944 983
- KR-Y1- 200 424 065

## Description

### [Technical Field]

The present invention relates to a detachable handle capable of being installed to be detachable from a cooking vessel such as a frying pan, a vessel, or the like, including a handle, in order to provide convenience of storage and transport of the cooking vessel.

### [Background Art]

A rim of a cooking vessel such as a frying pan, a vessel, or the like, for cooking food, has been necessarily installed with a handle having a predetermined thickness in order to perform cooking motion such as mixing of food, uniform heating of the food at the front and the rear, and the like, or movement of the foods. The handle is protruded from the rim of the cooking vessel to unnecessarily increase a volume of the cooking vessel, which causes large inconvenience in a display and storage of a cooking tool.

Therefore, a detachable handle has been recently developed and used in order to decrease the volume of the cooking vessel and move a heated cooking vessel or a cooking vessel containing other contents therein, which is difficult to hold according to a cooking situation, or the like.

The detachable handle includes a bar shaped body having a length appropriate for being held by a hand, a lever or rotary knob rotated based on one point of the body and appearing and disappearing inward or outward, and an actuation holding member moving forward and rearward at a front portion of the body using rotating movement of the lever or rotary knob to hold or release the rim of the cooking vessel. Further, there is a handle further including a safe locking means allow the lever or rotary knob to certainly hold the cooking vessel and maintain a state in which the cooking vessel is held.

The handle configured by the above-mentioned components has been developed in order to accomplish at least one of the objects such as convenience of use such as whether or not it may be actuated by one hand or two hands, certainty in holding the cooking vessel, an operation of the locking means, or the like. Therefore, many attempts have been conducted and will be conducted in the future in order to develop handles capable of safely moving the heated cooking vessel by allowing a holding tool to be easily and stably actuated at the time of holding and releasing the cooking vessel.

WO2007/032614A1 discloses a detachable handle for cooking vessels, which enables the user to simply manipulate the rotary-type working part only with one hand and can prevent the user from pressing the pin member due to carelessness.

However, the handle has been restrictively used for any one kind of cooking vessel. That is, a holding thickness of the actuation holding member of the handle has been specifically designed, such that the handle has not been used for different cooking vessels having different rim thicknesses. In addition, different cooking vessels having different thicknesses should be provided with the respective handles having holding thicknesses appropriate for the different cooking vessels.

### [Disclosure]

### [Technical Problem]

An object of the present invention is to provide a detachable handle capable of being commonly used for various different cooking vessels by allowing a holding thickness to be freely changed according to a thickness of a rim of a cooking vessel to allow the different cooking vessels to be held.

Another object of the present invention is to provide a detachable handle capable of holding various specifications of cooking vessels sub-divided at a smaller width and precisely and stably holding the cooking vessel by sub-dividing a control position interval of a control means for maintaining or releasing a holding state of an actuation holding member.

Still another object of the present invention is to provide a detachable handle capable of providing convenience in using a product and being stably actuated by allowing a rotation completion point of a rotary knob for holding a cooking vessel to continuously arrive at a regular position.

### [Technical Solution]

According to the present invention, there is a detachable handle according to independent claim 1.

### [Advantageous Effects]

The detachable handle according to the present invention is simply and easily detached and has a holding thickness freely changed according to the thickness of the rim of the cooking vessel to hold different cooking vessels, such that it is commonly used for various different cooking vessels, thereby making it possible to decrease the number of kitchen tools. Particular embodiments of the invention are disclosed in the dependent claims.

### [Description of Drawings]

FIG. 1 is an illustrative diagram showing a form in which a detachable handle according to an exemplary embodiment of the present invention is applied to a cooking vessel;
FIG. 2 is a partially cut-away front view of the entire shape of the detachable handle according to the exemplary embodiment of the present invention;
FIGS. 3A to 3C are plan views showing only an upper member of a body of the detachable handle according to the exemplary embodiment of the present invention, wherein

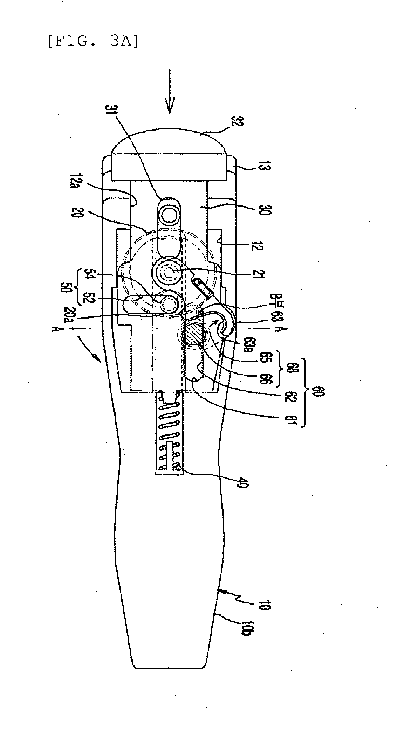

FIG. 3A is an illustrative diagram showing a form in which a cooking vessel having a rim with a minimum thickness is held,

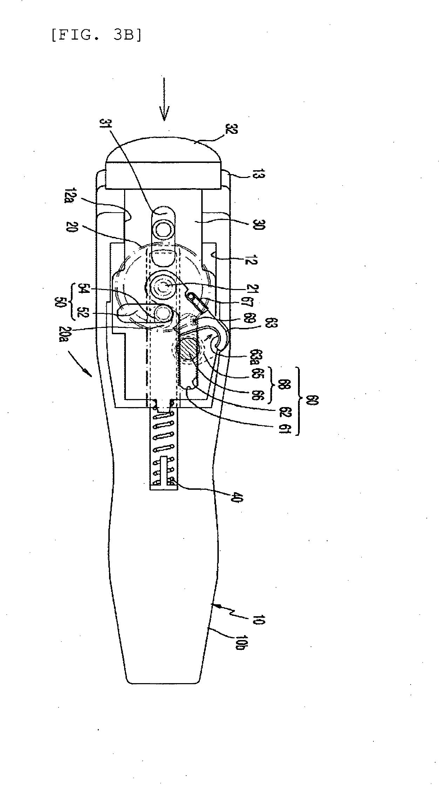

FIG. 3B is an illustrative diagram showing a form in which a cooking vessel having a rim with a maximum thickness is held, and

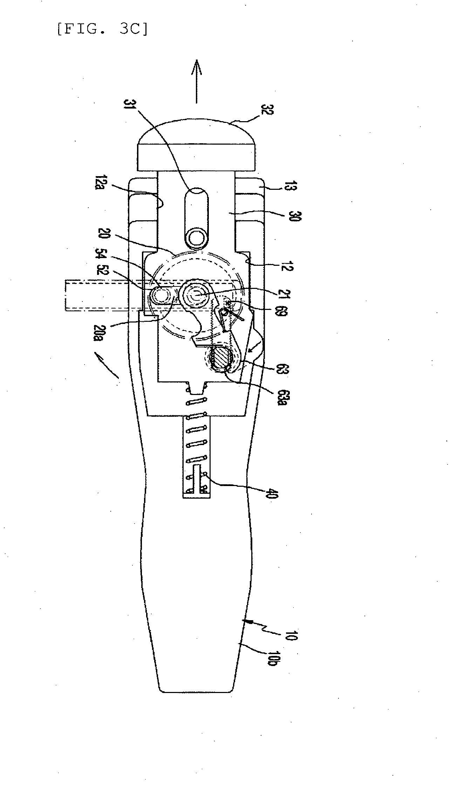

FIG. 3C is an illustrative diagram showing a form of a standby state for releasing the handle from the cooking vessel or holding the handle;

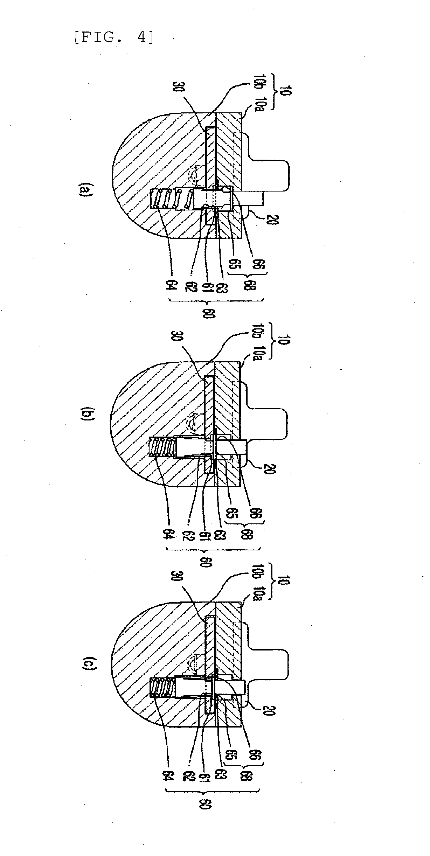

FIGS. 4A to 4C are enlarged cross-sectional views taken along the line A-A of FIG. 3A, wherein
FIG. 4A is an illustrative diagram showing a form in which a control button ascends simultaneously with being released from a braking piece, such that it is engaged with an actuation hole of an actuation holding member to maintain a holding state,
FIG. 4B is an illustrative diagram showing a form in which the control button descends in a process of releasing the holding state, such that the actuation holding member is not released before being separated from the actuation hole, and
FIG. 4C is an illustrative diagram showing a form in which the descent of the control button is completed, such that the actuation holding member is separated from the actuating hole, whereby the release of the holding state is completed and the control button of which the descent is completed is locked by the braking piece;

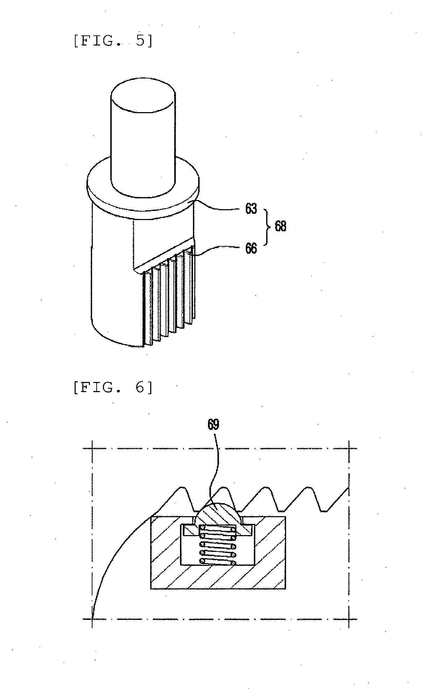

FIG. 5 is a perspective view showing a control button of a control means applied to the detachable handle according to the exemplary embodiment of the present invention; and
FIG. 6 is an enlarged view showing the part B of FIG. 3A.

### [Best Mode]

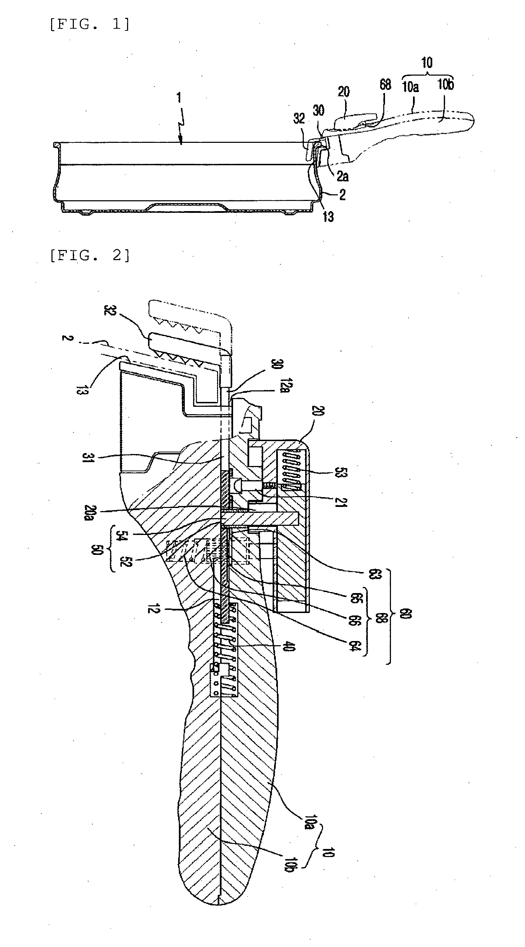

Hereinafter, an exemplary embodiment of the present invention will be described with reference to the accompanying drawings. FIG. 1 shows a form in which a detachable handle according to an exemplary embodiment of the present invention is applied to a cooking vessel.

The present invention is to provide a detachable handle detachably installed at a rim 2 of a cooking vessel 1 in a clamp scheme and used for cooking work or movement of the cooking vessel 1.

The handle according to the exemplary embodiment of the present invention includes a body 10 formed in a slim bar shape appropriate to be held, as shown in FIGS. 2 to 3C. An inner portion of the body 10 is provided with a receiving chamber 12 formed at a length direction of the body 10, wherein the receiving chamber 12 has an opening 12a at one end thereof.

In addition, a rotary knob 20 is installed on an upper surface of the body 10 so that it is freely rotatable in a vertical direction intersecting with a horizontal movement direction of an actuation holding member to be described below using a screw shaped support shaft 21 forming the center of rotation at the time of being coupled to the body 10 at a front portion thereof. Here, the actuation holding member 30 installed in the horizontal direction at the receiving chamber 12 in the body 10 enters or exits through the opening 12a by a rotating operation of the rotary knob 20 installed on the upper surface of the body 10 to hold or release the cooking vessel.

Describing the exemplary embodiment of the present invention in more detail, the body 10 is configured to include an upper member 10a and a lower member 10b that are disposed at upper and lower sides, respectively, having the actuation holding member 30 disposed therebetween, and are separated from or coupled to each other. Here, the receiving chamber 12 is provided in the lower member 10b.

In addition, the upper member 10a serves as a cover for opening or closing an inner portion of the body 10 in order to assemble or replace components to be described below such as the actuation holding member 30, and the like, in the body 10 and is coupled to the lower member 10b to smoothly guide forward and rearward movement of the actuation holding member 30. The upper and lower members 10a and 10b are coupled to each other by a coupling element such as a screw, or the like.

A front end of the lower member 10b of the body 10 is provided with a fixing holding element 13 facing an outer wall of the rim 2 of the cooking vessel. Here, an edge 2a of the rim 2 of the cooking vessel is disposed on an upper portion of the fixing holding element 13 in a jaw catching scheme. The disposition in the jaw catching scheme as described above allows the cooking vessel to be stably held by the handle, thereby preventing a phenomenon that the cooking vessel is easily separated from the handle.

In addition, the actuation holding member 30 installed in the length direction of the body 10 so as to be freely movable in the horizontal direction is interposed between the upper and lower members 10a and 10b configured as described above, wherein the actuation holding member 30 includes an actuation holding element 32 formed integrally therewith at a front end thereof and contacting an inner wall of the rim 2 of the cooking vessel. The actuation holding element 32 serves to hold or release the rim of the cooking vessel together with the fixing holding element 13.

In addition, a rear end of the actuation holding member 30 is elastically supported by a restoring element 40 installed at the rear of the receiving chamber 12 of the body 10, such that the actuation holding member 30 continuously moves toward the front of the body 10 by restoring force of the restoring element 40 when a control means to be described below is released. Here, the actuation holding member 30 is provided with a guide slot 31 guiding forward or rearward movement of the actuation holding member 30 and limiting a stroke distance, such that the forward or rearward movement of the actuation holding member 30 is performed in a predetermined range. In addition, the stroke distance accommodates both of the minimum and maximum thicknesses of the rim 2 of the cooking vessel.

Meanwhile, the actuation holding member 30 moving forward or rearward in the length direction in the body 10 and the rotary knob 20 freely rotated on the upper surface of the body 10 are disposed at upper and lower positions, respectively, while moving in directions intersecting with each other. According to the exemplary embodiment of the present invention, the rotor knob 20 is disposed over the actuation holding member 30.

In the disposition relationship between the rotary knob 20 and the actuation holding member 30 as described above, a power transmitting structure 50 is provided between the actuation holding member 30 and the rotary knob 20 to convert rotational force of the rotary knob 20 into linear movement, thereby actuating the actuation holding member 30 so as to perform a holding or releasing operation of the cooking vessel.

In addition, the above-mentioned power transmitting structure 50 includes an actuation slot 52 formed in the actuation holding member 30 in a direction intersecting with a movement direction of the actuation holding member 30 and an actuation pin 54 having a changed position while moving inward or outward along a path 20a provided on a diameter line passing through the shaft of the rotary knob 20 on a lower surface of the rotary knob 20. The actuation slot 52 and the actuation pin 54 of the power transmitting structure 50 provided as described above are coupled to each other in a jaw catching scheme using a mutual line contact, such that when rotational force is applied to the rotary knob 20, the actuation pin 54 rotated while having a predetermined radius is slid along the actuation slot 52 to convert the rotational force of the rotary knob 20 to the linear movement of the actuation holding member 30, thereby allowing the actuation holding member 30 to move forward or rearward. Here, a stroke distance of the forward or rearward movement of the actuation holding member 30 is present in a rotation radius of the actuation pin 54, which is changed in a distance determined by a length of the path 20a.

In addition, the actuation pin 54 has the changed position while moving inward or outward along the path 20a of the rotary knob 20 as described above, such that the rotation radius of the actuation pin 54 is extended or contracted. The extension or contraction of the rotation radius of the actuation pin 54 provides a variable forward or rearward stroke of the actuation holding member 30 and allows a rotation completion point of the rotary knob 20 for holding the cooking vessel 1 to continuously arrive at a normal position without a change in a thickness of the rim 2 of the cooking vessel 1 to be held.

In addition, the actuation pin 54 is continuously restored to an outer side in the rotary knob 20 by the restoring element 53. Here, a restoring element 53 for restoration of the actuation pin 54 has an elastic modulus larger than that of the restoring element 40 of the above-mentioned actuation holding member 30.

Therefore, as the rotary knob 20 is rotated in a forward or reverse direction, the actuation slot 52 and the actuation pin 54 of which the rotation radius is changed according to the thickness of the rim 2 of the cooking vessel cooperate with each other, such that a holding thickness of the actuation holding member 30 is freely adjusted and all of the cooking vessels 1 having the rims 2 with various thicknesses are engaged and held.

In addition, the actuation holding member 30 includes a control means 60 allowing a holding state thereof to be maintained or released. The control means 60 is a core technology of the present invention.

In FIGS. 4A to 5, the control means 60 is shown in detail. The control means 60 includes teeth rows 62 provided in parallel with each other at both sides of an actuation hole 61 formed in the actuation holding member 30 in a forward or rearward movement direction of the actuation holding member 30, and a control button 68 including a spline axis 66 engaged with or separated from the teeth rows while passing through the actuation hole 61 including the teeth rows 62 in a direction perpendicular to the actuation hole 61 to appear or disappear upwardly of the body 10 and a braking jaw 65 maintaining an appropriate interval from the spline axis 66 directly over the spline axis 66 to control an operation in which the spline axis 66 appears or disappears upwardly of the body 10 using a braking piece to be described below. Here, the teeth row 62 or the spline axis 66 has a pitch of a minimum unit, which increases a holding allowable range of cooking vessels having various thicknesses that is changed in a minimum unit.

In addition, the control button 68 has a lower end elastically supported by a restoring element 64 to perform an ascent operation for engagement between the teeth row 62 and the spline axis 66 when the control is released. Here, in order to accomplish stable and firm matching at the time of the engagement between the teeth row 62 and the spline axis 66, the control means 60 is provided with a position arranging element 69 elastically installed on a movement path of the teeth row 62 provided in the actuation holding member 30 to thereby be matched with the spline axis 66, as shown in FIG. 6.

Further, the above-mentioned braking piece 63 is interposed between the actuation holding member 30 and the upper member 10a in a horizontal direction intersecting with an appearance or disappearance direction of the control button 68. The braking piece 63 is formed in a plate shape and has one end freely rotatably coupled to the support shaft 21 of the rotary knob 20 and the other end extended by a predetermined length and including a receiving groove 63a formed at an end portion thereof, wherein the receiving groove 63a has a radius smaller than an outer diameter of the braking jaw 65 of the control button 68.

In addition, the braking piece 63 configured as described above is installed in an intersecting direction in a rotation trajectory of the actuation pin 54 to interlock with the actuation pin 54 by rotational force of the actuation pin 64. The braking piece 63 controls the braking jaw 65 of the control button 68 in the jaw catching scheme and is pushed by the rotational force of the actuation pin 54 when the rotary knob 20 is rotated to thereby arrive at a holding completion point in time to release the control state by allowing the receiving groove 63a to be separated from the baking jaw 65 that it has controlled in the jaw catching scheme.

Further, the braking piece 63 is elastically installed by the restoring element 67 installed as a free end in the receiving chamber 12 to thereby be restored to the control button 68 when the rotational force of the actuation pin 54 is removed.

Hereinafter, a process in which the detachable handle according to the exemplary embodiment of the present invention holds or releases the cooking vessel will be described with reference to FIGS. 3A to 4C.

First, referring to FIG. 3A showing a form in which the actuation holding member 30 of the handle maximally moves rearward to hold the cooking vessel 1 having a minimum thickness of the rim 2, when the rotary knob 20 is rotated in an arrow direction corresponding to a counterclockwise direction shown in FIG. 3A, the actuation pin 54 of the power transmitting structure 50 is positioned at an outer end of the path 20a, such that the actuation pin 54 is rotated in a maximum rotation radius and the rotational force thereof is converted into linear movement through the actuation slot 52 to move the actuation holding member 30 rearward. At a point in time at which the rearward movement is completed, that is, at a point in time at which the holding of the rotary knob 20 is completed, the braking piece 63 of the control means 60 is pushed by the rotational force of the actuation pin 54 to thereby be rotated in the arrow direction corresponding to the counterclockwise direction shown in FIG. 3A, such that it is separated from the braking jaw 65 of the control button 68. Therefore, the control button 68 that has been controlled ascends with the aid of the restoring member 64 as shown in FIG. 4A simultaneously with being released, such that the teeth row 62 of the actuation hole 61 and the spline axis 66 are engaged with each other, thereby stably maintaining the holding state of the actuation holding member 30. When the control button 68 ascends or descends, the control button 68 is arranged without being twisted or displaced by an ascent or descent guiding structure such as a guide rail, or the like, additionally provided in the body 10, such that the teeth row 62 and the spline axis 66 are matched with each other.

FIG. 3B shows a state in which the actuation holding member 30 of the handle minimally moves rearward to hold the cooking vessel 1 having a maximum thickness. Here, the actuation holding member 30 performs the same process as the above-mentioned process except that the actuation pin 54 of the power transmitting structure 50 is positioned at an inner side end of the path 20a of the rotary knob 20, such that it is rotated in a minimum rotation radius and the rotational force thereof is converted into linear movement through the actuation slot 52 to minimally move the actuation holding member 30 rearward.

Here, the minimum rearward movement of the actuation holding member 30 is due to rotation of the minimum rotation radius of the actuation pin 54 of the power transmitting structure 50. More specifically, during rotating actuation of the rotary knob 20 for holding the cooking vessel, that is, before the rotary knob 20 arrives at a rotation completion point in time for holding the cooking vessel, the rearward movement of the actuation holding member 30 is stopped by the thickness of the rim 2 of the cooking vessel 1 and at the same time, the rotational force of the rotary knob 20 is transmitted to the actuation pin 54 freely movably installed in the path 20a to push and move the actuation pin 54 toward an inner end of the path 20a, thereby accomplishing movement in a predetermined minimum rotation radius.

The rotation radius of the actuation pin 54 of the power transmitting structure 50 is varied as described above to allow cooking vessels having various thicknesses to be held and allow the rotation completion point of the rotary knob 20 for holding the cooking vessel to constantly arrive at a regular position without a change in the thickness of the rim 2 of the cooking vessel 1 to be held.

FIG. 3C shows a state in which the actuation holding member 30 of the handle maximally moves forwardly to stand by for release or holding. More specifically, when the control button 68 of the control means 60 protruded from the upper surface of the body 10 in the holding state as shown in FIG. 3A or 3B is pressed and descends, such that the braking jaw 65 of the control button 68 does not pass through the braking piece 63 as shown in FIG. 4B, the spline axis 66 is continuously maintained in a state in which it is engaged with the teeth row 62 of the actuation hole 61 to maintain the holding state of the actuation holding member 30. Then, when the braking jaw 65 passes through the braking piece 63 as shown in FIG. 4C and the spline axis 66 is separated from the teeth row 62 of the actuation hole 61, the holding state of the actuation holding member 30 is released, such that the actuation holding member 30 moves forward with the aid of the restoring element 40. At this time, the power transmitting structure 50 converts forward movement force of the actuation holding member 30 in reverse order to the above-mentioned holding process to rotate the rotary knob 20 in an arrow direction corresponding to a clockwise direction shown in FIG. 3C. At the same time, the braking piece 63 that has been pushed to the actuation pin 54 is restored in the arrow direction corresponding to the clockwise direction shown in FIG. 3C to lock the control button 68 at a position to which the control button 68 descends and stand by for the next holding.

The detachable handle according to the exemplary embodiment of the present invention holds different kinds of cooking vessels 1 having different rim thicknesses while variably changing a holding thickness according to the different kinds of cooking vessels 1.

Hereinabove, although the exemplary embodiment of the present invention has been described, the present invention is not limited thereto, but may be variously modified without departing the scope of the present invention as defined in the claims.

## Claims

1. A detachable handle detachably installable at a cooking vessel (1) while holding or releasing a rim (2) of the cooking vessel, the handle comprising:
a body (10) having a fixing holding element (13) extended by a predetermined length in a shape appropriate to be held, including a receiving chamber (12) provided therein, and contacting an outer wall of the rim of the cooking vessel;
an actuation holding member (30) having an actuation holding element (32) provided at one end thereof so as to contact an inner wall of the rim of the cooking vessel and installed to be horizontally moveable in the receiving chamber to move forward or rearward with respect to the fixing holding element and be restored to the releasing state using a restoring element provided at the other end thereof, in order to hold the cooking vessel in a relationship with the fixing holding element;
a rotary knob (20) installed on the body so as to be rotatable using a support shaft (21) in a vertical direction intersecting with a direction in which the actuation holding member moves forward or rearward;
a power transmitting structure (50) provided between the actuation holding member and the rotary knob to convert rotational force of the rotary knob into linear movement and generate forward or rearward movement of the actuation holding member associated with the fixing holding member, thereby accomplishing the hold or the release; and
**characterized by** further comprising a control means (60) including teeth rows (62) provided at both sides of an actuation hole formed in the actuation holding member in a forward or rearward movement direction of the actuation holding member and a control button (68) having a spline axis (66) installed in the body to appear or disappear in a vertical direction intersecting with the forward or rearward movement direction of the actuation holding member to brake or release the actuation holding member while being engaged with or separated from the teeth rows, thereby allowing the holding state of the actuation holding member to be maintained or released,
wherein the rotary knob is rotated in a forward direction or a reverse direction, such that the actuation holding member associated with the fixing holding member of the body is engaged with the rims according to different cooking vessels having different thicknesses to hold or release the rims, while moving forward or rearward.

2. The detachable handle of claim 1, wherein the power transmitting structure includes an actuation slot (52) provided in the actuation holding member in the direction intersecting with the forward or rearward movement direction of the actuation holding member and an actuation pin (54) associated with the actuation slot and installed to be freely moveable in the rotary knob to have a rotation radius adjusted according to a change in a holding movement distance of the actuation holding member according to a thickness of the rim of the cooking vessel, thereby allowing a rotation completion point of the rotary knob for holding the cooking vessel to continuously arrive at a regular position.

3. The detachable handle of claim 2, wherein the power transmitting structure further includes an actuation pin of which a position is continuously restored to its original position by a restoring element.

4. The detachable handle of claim 1, wherein the control means further includes a position arranging element (69) allowing the teeth row of the actuation hole and the spline axis of the control button to be matched with each other.

5. The detachable handle of claim 1, further comprising a braking piece (63) controlling appearance and disappearance of the control button.

6. The detachable handle of claim 5, wherein the braking piece allows the control button to be released in a locking state at a point in time at which the holding state is completed by rotational actuating force of the rotary knob.

## Patentansprüche

1. Abnehmbarer Griff, der an einem Kochgefäß (1) abnehmbar angebracht ist, während ein Rand (2) des Kochgefäßes festgehalten oder losgelassen wird, wobei der Griff folgendes umfasst:
einen Körper (10) mit einem Befestigungshalteelement (13), das um eine vorbestimmte Länge in einer entsprechenden Form, um gehalten zu werden, verlängert ist, einschließlich einer darin vorgesehenen Aufnahmekammer (12), und Kontaktieren einer Außenwand des Randes des Kochgefäßes;
ein Betätigungshalteelement (30) mit einem an einem Ende davon vorgesehenen Betätigungshalteelement (32), um eine Innenwand des Randes des Kochgefäßes zu kontaktieren, und das angebracht ist, um horizontal in der Aufnahmekammer zur Bewegung nach vorne und hinten in Relation zu dem Befestigungshalteelement beweglich zu sein und um unter Verwendung eines restaurativen Elements in den losgelassenen Zustand zurückversetzt zu werden, um das Kochgefäß in einer Beziehung zu dem Befestigungshalteelement zu halten;
einen Drehknopf (20), der an dem Körper angebracht ist, um unter Verwendung eines Trägerschafts (21) in einer vertikalen Richtung drehbar zu sein, in welcher sich das Betätigungshalteelement nach vorne oder nach hinten bewegt;
eine zwischen dem Betätigungshalteelement und dem Drehknopf vorgesehene Energieübertragungsstruktur (50), um Rotationsenergie des Drehknopfes in lineare Bewegung umzuwandeln und um die Vorwärts- und Rückwärtsbewegung des dem Betätigungshalteelement zugeordneten Befestigungshalteelement zu erzeugen, um dadurch das Festhalten oder Loslassen zu bewerkstelligen; und
**dadurch gekennzeichnet, dass** er weiterhin ein Kontrollmittel (60), das Zahnreihen (62) umfasst, die auf beiden Seiten eines in dem Betätigungshalteelement in einer Bewegungsrichtung nach vorne oder hinten vorgesehenen Betätigungsloches vorgesehen sind, und einen Kontrollknopf (68) mit einer Kerbverzahnungsachse (66), die in dem Körper vorgesehen sind, umfasst, um sich in einer vertikalen Richtung mit der Vorwärts- und Rückwärtsbewegungsrichtung des Betätigungshalteelements zu schneiden, um das Betätigungshalteelement abzubremsen oder loszulassen, während es in die Zahnreichen eingreift oder davon getrennt ist, wodurch sich der Haltezustand des Betätigungshalteelements halten oder loslassen lässt,
wobei der Drehknopf in einer Vorwärtsrichtung oder einer umgekehrten Richtung gedreht wird, derart, dass das dem Befestigungshalteelement des Körpers beigefügte Betätigungshalteelement entsprechend der verschiedenen Kochgefäße mit verschiedener Dicke in die Ränder eingreift, um die Ränder zu halten oder loszulassen, während es sich nach vorne oder nach hinten bewegt.

2. Abnehmbarer Griff nach Anspruch 1, wobei die Energieübertragungsstruktur einen Betätigungsschlitz (52) umfasst, der in dem Betätigungshalteelement in der Richtung vorgesehen ist, die sich mit der Vorwärts- oder Rückwärtsbewegungsrichtung des Betätigungshalteelements schneidet und einen Betätigungsstift (54), der dem Betätigungsschlitz beigefügt ist und angebracht ist, um in dem Drehknopf frei beweglich zu sein, um einen Drehradius aufzuweisen, der je nach Änderung in einem Haltebewegungsabstand des Betätigungshalteelements je nach Dicke des Randes des Kochgefäßes eingestellt ist, wodurch es ermöglicht wird, dass ein Rotationsendpunkt des Drehknopfes kontinuierlich eine normale Position erreicht.

3. Abnehmbarer Griff nach Anspruch 2, wobei die Energieübertragungsstruktur weiterhin einen Betätigungsschlitz umfasst, bei dem eine Position durch ein restauratives Element kontinuierlich wieder in seine Ursprungsposition zurückversetzt wird.

4. Abnehmbarer Griff nach Anspruch 1, wobei das Kontrollmittel weiterhin ein Positionsanordnungselement (69) umfasst, durch das sich die Zahnreihen des Betätigungsloches und die Kerbverzahnungsachse des Kontrollknopfes ineinanderpassen lassen.

5. Abnehmbarer Griff nach Anspruch 1, weiterhin umfassend ein Bremsstück (63) das das Erscheinen oder Verschwinden des Kontrollknopfes steuert.

6. Abnehmbarer Griff nach Anspruch 5, wobei es das Bremsstück ermöglicht, dass der Kontrollknopf in einem Verriegelungszustand zu einem Zeitpunkt losgelassen wird, zu dem der Haltezustand durch Betätigungsdrehkraft des Drehknopfes beendet ist.

## Revendications

1. Poignée amovible installée sur un récipient de cuisson (1) d'une manière amovible tout en tenant ou lâchant un bord (2) du récipient de cuisson, la poignée comprenant :
un corps (10) ayant un élément fixateur de retenue (13) étendu par une longueur prédéterminée en forme appropriée pour être tenu, incluant une chambre de réception (12) prévue là-dedans, et contactant une paroi extérieure du bord du récipient de cuisson ;
un élément activateur de retenue (30) ayant un élément activateur de retenue (32) prévu sur une extrémité de celui-ci afin de contacter une paroi intérieure du bord du récipient de cuisson et installé pour être mobile horizontalement dans la chambre de réception afin de se déplacer en avant ou en arrière en relation de l'élément fixateur de retenue et être restauré vers l'état relâchement en utilisant un élément de restauration prévu sur l'autre extrémité de celui-ci, afin de tenir le récipient de cuisson dans une relation avec l'élément fixateur de retenue ;
un bouton rotatif (20) installé sur le corps pour être rotatif en utilisant une tige de support (21) dans une direction verticale se croisant avec une direction dans laquelle l'élément activateur de retenue se déplace en avant ou en arrière ;
une structure transmettant de puissance (50) prévue entre l'élément activateur de retenue et le bouton rotatif afin de transformer de la puissance rotative du bouton rotatif en mouvement linéaire et créer le mouvement avant ou arrière de l'élément activateur de retenue associé avec l'élément fixateur de retenue, en accomplissant de ce fait le rétention ou le relâchement ; et
**caractérisée par le fait qu'**elle comprend en outre un moyen de contrôle (60) incluant des rangée de dents (62) prévues sur les deux côtés d'un trou activateur formé dans l'élément activateur de retenue dans une direction de déplacement avant ou arrière de l'élément activateur de retenue et un bouton de contrôle (68) ayant une axe d' arbre cannelé (66) installée dans le corps afin d'apparaitre ou disparaitre dans une direction verticale se croisant avec la direction de mouvement avant ou arrière de l'élément activateur de retenue pour freiner ou relâcher l'élément activateur de retenue pendant être engagé avec ou être séparé des rangées de dents, permettant de ce fait à l'état de retenue de l'élément activateur de retenue d'être maintenu ou relâché,
dans laquelle le bouton rotatif est tourné dans une direction avant ou dans une direction inverse, d'une manière que l'élément activateur de retenue associé avec l'élément fixateur de retenue du corps est engagé avec des bords selon de différents récipients de cuisson ayant de différentes épaisseurs afin de tenir ou relâcher les bords tout en se déplaçant en avant ou en arrière.

2. Poignée amovible selon la revendication 1, dans laquelle la structure transmettant de puissance comprend une fente activatrice (52) prévue dans l'élément activateur de retenue dans la direction se croisant avec la direction de déplacement avant ou arrière de l'élément activateur de retenue et une goupille activatrice (54) associée avec la fente activatrice et installée pour être librement déplaçable dans le bouton rotatif afin d'avoir un rayon de rotation réglé selon une variation dans une distance de déplacement de retenue de l'élément activateur de retenue selon une épaisseur du bord du récipient de cuisson, permettent de ce fait à un point final de rotation du bouton rotatif d'arriver continument à une position régulier.

3. Poignée amovible selon la revendication 2, dans laquelle la structure transmettant de puissance comprend en outre une goupille activatrice dont laquelle une position est restaurée continument vers sa positon d'origine par un élément restaurateur.

4. Poignée amovible selon la revendication 1, dans laquelle le moyen de contrôle comprend en outre un élément arrangeur de position (69) permettant à la rangée de dents du trou activateur et à l'axe de l'arbre cannelé du bouton de contrôle d'être associées l'une avec l'autre.

5. Poignée amovible selon la revendication 1, comprenant en outre un morceau au frein (63) contrôlant l'apparition et la disparition du bouton de contrôle.

6. Poignée amovible selon la revendication 5, dans laquelle le morceau au frein permet au bouton de contrôle d'être relâché dans un état de verrouillage à un point dans l'époque auquel l'état de retenue est achevé par la puissance activatrice rotative du bouton rotatif.
